# EUROPEAN PATENT SPECIFICATION

(11) **EP 4 398 362 B1**
(45) Date of publication and mention of the grant of the patent: **27.08.2025**
(21) Application number: 22866116.1
(22) Date of filing: 06.05.2022
(51) Int. Cl.: H01M 10/0565, C08G 61/12, C08G 81/02

(54) **POLYMER SOLID ELECTROLYTE AND APPLICATION**
POLYMERFESTELEKTROLYT UND ANWENDUNG
ÉLECTROLYTE SOLIDE POLYMÈRE ET APPLICATION

(30) Priority: 07.09.2021 CN 202111044424
(43) Date of publication of application: 10.07.2024
(73) Proprietor: Nanjing Bochi New Energy Co., Ltd., Nanjing, Jiangsu 211800 (CN)
(72) Inventor: CHAO, Liu, Nanjing, Jiangsu 211800 (CN); YANG, Fan, Nanjing, Jiangsu 211800 (CN)
(74) Representative: Bayramoglu et al.
(86) International application number: PCT/CN2022/091132
(87) International publication number: WO 2023/035638

(56) References cited:
- WO-A1-2020/068145
- CN-A- 103 003 356
- CN-A- 103 515 649
- CN-A- 103 936 972
- CN-A- 104 804 176
- CN-A- 112 912 421
- JP-A- 2001 342 322
- US-A1- 2013 066 025
- MCCULLOUGH LYNNE A. ET AL: "Conjugated Conducting Polymers as Components in Block Copolymer Systems", MOLECULAR CRYSTALS AND LIQUID CRYSTALS, vol. 521, no. 1, 25 May 2010 (2010-05-25), UK, pages 1 - 55, XP093229157, ISSN: 1542-1406, DOI: 10.1080/15421401003719951

## Description

### TECHNICAL FIELD

The present invention relates to the field of electrochemical energy storage, and relates to a polymer electrolyte material with an ion transmission ability and application of the polymer electrolyte material.

### BACKGROUND

In recent years, a lithium-ion battery has developed rapidly. Due to its excellent energy storage performance, cycle performance and rate performance, it has been widely used in the consumer electronics industry, the power vehicle industry, and the energy storage industry. With the continuous increasing of the product demand, the battery is also constantly developing and upgrading, and a solid-state lithium-ion battery becomes a development direction of a next generation of the lithium-ion battery.

Instead of a liquid electrolyte, as an ion conduction medium in the battery, a non-flowing and non-flammable solid ionic electrolyte is considered as an important factor for solving the safety problem of lithium batteries.

A high-quality solid electrolyte material is necessary to have the following conditions:
1) a good ionic conductivity at a room temperature;
2) a high electrochemical window;
3) low interface resistance with an active material;
4) easiness in process molding;
5) good thermal stability and chemical stability; and
6) low production and use costs.

At present, there are sulfide solid electrolytes, oxide solid electrolytes, polymer solid electrolytes, etc. Among them, although the sulfide solid electrolyte has a high conductivity at the room temperature, its intrinsic stability is poor, and requirements for its production and use conditions are very strict, so that the sulfide solid electrolyte is not conductive to commercialization; although the oxide solid electrolyte has good ionic conductivity, it is highly hard and brittle, so that the oxide solid electrolyte has very large interface impedance; and the traditional polymer solid electrolyte mainly transfers ions by chain segment movement, and features easiness in process molding and low interface impedance, but its conductivity at the room temperature is generally low, so that the traditional polymer solid electrolyte is necessary to be used under the heating. Therefore, it is an important research direction to develop a polymer solid electrolyte material with a high conductivity at the room temperature, easiness in process molding and low interface impedance.

WO2020/068145A1 and US2013/066025A1 disclose block copolymer electrolytes having at least one ionically conducting block comprising polyester and an electrolyte salt and at least one poly(2,6-dimethyl-1,4-phenylene oxide)(PXE) block immiscible with the ionically conducting block.

### SUMMARY

Aiming to the above problems of an existing solid electrolyte, the present invention, as defined in the appending claims, provides a polymer solid electrolyte to meet the needs for use of a lithium battery.

According to the first purpose of the present disclosure, the present invention provides a polymer solid electrolyte, including a polymer and at least one electrolyte salt, where the polymer is composed of a plurality of conjugated units/chain segments and non-conjugated units/chain segments, and a general formula of the polymer is R-(Aₙ-Bₘ)ₖ-R; and in the general formula, Aₙ is the conjugated unit/chain segment, having completely delocalized electrons, Bₘ is the non-conjugated unit/chain segment without completely delocalized electrons in a main chain range,
n is an integer larger than or equal to 1 and smaller than or equal to 6, m is an integer larger than 0 and smaller than or equal to 10, and k is an integer larger than or equal to 1 and smaller than or equal to 1000.

Preferably, a conjugated structure in Aₙ may be a chain structure or a ring structure; further, the ring structure may be an aromatic ring or a heteroatom ring; more further, heteroatoms in the heteroatom ring may be sulfur atoms, nitrogen atoms, oxygen atoms and boron atoms.

Preferably, the conjugated unit A may contain a structure with 1-4 rings:
(1) A may contain a single ring, such as a phenyl group, a thienyl group, a pyrrolyl group, a furan group, a thiazolyl group, and a pyridyl group, and may contain heteroatoms or branched chains, such as 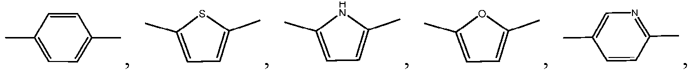 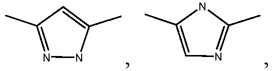 here n = 1-6;
(2) A may contain double rings, such as a quinolyl group, a naphthyl group, and an azulenyl group, and may contain heteroatoms or branched chains such as 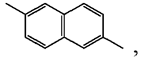 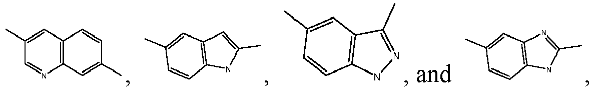 here n = 1-4;
(3) A nay be of three rings, such as a fluorenyl group, a carbazolyl group, a phenanthryl group, and an anthryl group, and may also contain heteroatoms or branched chains such as 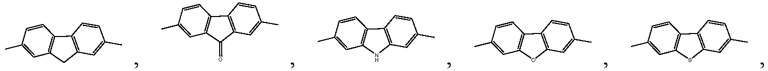 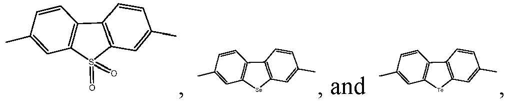 here n = 1-3;
(4) A may contain four rings, such as a benzoanthryl group, and a benzophenanthryl group, and may contain heteroatoms or branched chains, here n = 1-2; and
(5) A may contain any one of the above ring structures or a combination of the various ring structures.

Preferably, the conjugated unit/chain segment Aₙ may further contain different side chains Rs to improve the physical properties (including crystallinity, solubility, a melting temperature, processing performance, etc.) of the material.

For reference, the conjugated unit/chain segment Aₙmay form and transport a hole. Cations and anions may migrate on the conjugated unit/chain segment.

Preferably, a non-conjugated unit B may be an ether group, a thioether group, an ester group, a carbonate group, a phenyl ether group, a phenyl sulfide group, a propenyl group, and other groups such as

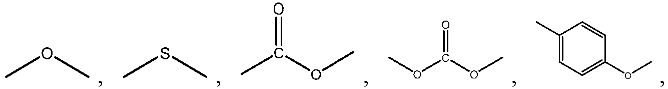

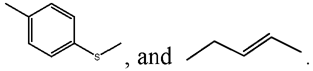

Preferably, in the general formula of the polymer, R may be a common end-capping group such as an alkanyl group, the ether group, the ester group or hydrogen.

Preferably, the cations in the electrolyte salt contain monovalent cations or divalent metal cations; and further, the cations may be lithium ions.

Preferably, in the electrolyte salt, the anions are one or more of hexafluorophosphate ions PF₆⁻, bis(trifluoromethylsulfonyl)imide anions TFSI⁻, bis(oxalate)borate anions BOB⁻, tetrafluoroborate ions BF₄⁻, difluoro(oxalato)borate anions ODFB⁻, bis(fluorosulfonyl)imide anion FSI⁻, etc.

Preferably, in the polymer, each conjugated unit/chain segment contains at least one cation and at least one anion.

Preferably, an ionic conductivity of the solid electrolyte at a room temperature is larger than or equal to 1 × 10⁻⁴ S/cm, preferably (1 × 10⁻⁴ - 1 × 10⁻²) S/cm.

As another purpose of the present invention, the present invention further provides application of the solid electrolyte in the preparation of an electrochemical device.

The conjugated units/chain segments of the polymer interact with the electrolyte salt to provide an ion migration channel, while the non-conjugated units/chain segments play a role in weakening the electronic conductivity of the polymer itself. An ionic conductivity of the solid electrolyte is very high and may reach 1 × 10⁻⁴ S/cm or above at the room temperature, and the solid electrolyte can conduct a variety of ion systems. The solid electrolyte may be molded separately to be used for preparing a solid-state ionic conductive film, be mixed with positive and negative active materials and a conductive agent for the preparation of a dry electrode, or be used for preparing an electrochemical device such as a solid-state battery and a solid-state supercapacitor.

An all-solid-state lithium battery prepared by using the solid electrolyte of the present invention, with a lithium nickel cobalt manganese oxide as a positive electrode and graphite as a negative electrode, has good electrical performance and safety performance. It can pass safety performance tests such as an acupuncture test and a heavy object impact test.

### BRIEF DESCRIPTION OF THE DRAWINGS

FIG. 1 is an electrochemical impedance diagram of a polymer solid electrolyte sheet in example 1-1 of the present invention;
FIG. 2 is an electrochemical impedance diagram of a polypyrrole polymer electrolyte in comparative example 1-1 of the present invention;
FIG. 3 is an electrochemical impedance diagram of a polyethylene oxide polymer electrolyte in comparative example 1-2 of the present invention;
FIG. 4 is a diagram showing comparison on ionic conductivities of the polymer solid electrolyte containing different ratios of conjugated/non-conjugated units in example 1-4 of the present invention;
FIG. 5 is a structural schematic diagram of a solid-state lithium battery assembled using a polymer electrolyte in example 2-1 of the present invention; and
FIG. 6 is a diagram showing a charge-discharge curve of a solid-state lithium battery assembled using a polymer electrolyte in example 2-1 of the present invention.

### DETAILED DESCRIPTION OF THE INVENTION

The polymer electrolyte of the present invention is composed of a polymer and an electrolyte salt, where a general formula of the polymer is R-(Aₙ-Bₘ)ₖ-R, where n is an integer larger than or equal to 1 and smaller than or equal to 6, m is an integer larger than or equal to 0 and smaller than or equal to 10, and k is an integer larger than or equal to 1 and smaller than or equal to 1000, where Aₙ is of a conjugated structure, called a conjugated unit/chain segment; and Bₘ is of a non-conjugated structure, called a non-conjugated unit/chain segment or a spacer unit/chain segment.

The polymer electrolyte according to the exemplary embodiment of the present invention may be obtained by the following method.

First, a monomer of the conjugated unit/chain segment and a monomer of the non-conjugated unit/chain segment are mixed and dissolved into a solvent. The monomer of the conjugated unit/chain segment may be one or more of pyrrole, thiophene, carbazole, furan or their derivatives. The monomer of the non-conjugated unit/chain segment may be one or more of an olefin, a carboxylic acid, an alcohol, an amine, a ketone, ether or their derivatives.

With regard to the solvent, solvents having good compatibility with the monomer of the conjugated unit/chain segment and the monomer of the non-conjugated unit/chain segment are preferred; and they may be water, organic solvents or a mixture of a plurality of solvents. The organic solvents may include ether solvents, alcohol solvents, aromatic solvents, and aliphatic solvents.

In the exemplary embodiment of the present invention, a target polymer is obtained by means of chemical oxidative polymerization of the above monomers with an oxidant. However, it is not limited to oxidative polymerization; and the polymer may further be prepared by coupling, condensation, transesterification and other methods.

Persulfates such as ammonium persulfate, sodium persulfate and potassium persulfate may be used as oxidants; and inorganic salts such as ferric chloride and arsenic oxide may also be used as oxidants for chemical oxidative polymerization of the above monomers. One or a combination of more than two of the oxidants may be used.

Preferably, chemical oxidative polymerization of the monomers is performed under stirring.

Chemical oxidative polymerization may also be performed in the presence of a surfactant. If a solubility of each monomer in the solvent is low, a dispersion ability of the monomer may be improved by using the surfactant.

In the embodiments of the present invention, the required polymer obtained above is then washed. The polymer may be separated from a washing solution by filtration or centrifugation.

The electrolyte salt is dissolved into a suitable solvent, and then mixed with the polymer, and the polymer electrolyte of the present invention may be obtained after the solvent is volatilized, where the selected electrolyte salt may be a lithium salt, a sodium salt, a potassium salt, an ammonium salt, or the like. In the electrolyte salt, cations are monovalent cations or divalent metal cations; and anions are one or more of hexafluorophosphate ions PF₆⁻, bis(trifluoromethylsulfonyl)imide anions TFSI⁻, bis(oxalate)borate anions BOB⁻, tetrafluoroborate ions BF₄⁻, difluoro(oxalato)borate anions ODFB⁻, bis(fluorosulfonyl)imide anion FSI⁻, etc.

An ionic conductivity of the polymer electrolyte is calculated by obtaining an impedance curve through an electrochemical impedance spectrum, and then performing equivalent circuit fitting.

The following are the preparation and application examples of the polymer electrolyte material of the present invention, but the embodiments of the present invention are not limited to these examples.

### Example 1-1

6.7 g of pyrrole and 2.9 g of ethylene oxide were added to 500 mL of a deionized water solvent, and the solution was stirred in a closed environment at a room temperature for 1 h to obtain a uniform colorless solution.

Subsequently, 500 g of an aqueous solution containing ammonium persulfate with a weight ratio of 40% as an oxidant was added to the solution by 5 equal parts every 10 mins; and then, the solution was stirred at the room temperature for 50 h to perform chemical oxidative polymerization for synthesis. At this time, the solution became turbid with the occurrence of an insoluble product.

Subsequently, a reaction liquid was filtered using a filter paper with a retention diameter of 3 µm, through which a polymer could not pass through, and a polymer product could be obtained. The polymer was washed repeatedly with a solvent to remove excess oxidant and unreacted monomers until a pH value of a washing solution reached 6-7. The obtained polymer was then baked at 120°C in the air for 3 h to remove the solvent, so as to obtain the polymer which was black.

14 g of an electrolyte salt LiTFSI was dissolved into 50 g of water. 8 g of the obtained conjugated polymer was put into the LiTFSI solution for stirring; then a mixture was vacuum baked at 120°C for 12 h to remove water; and finally, a finished polymer electrolyte product was obtained.

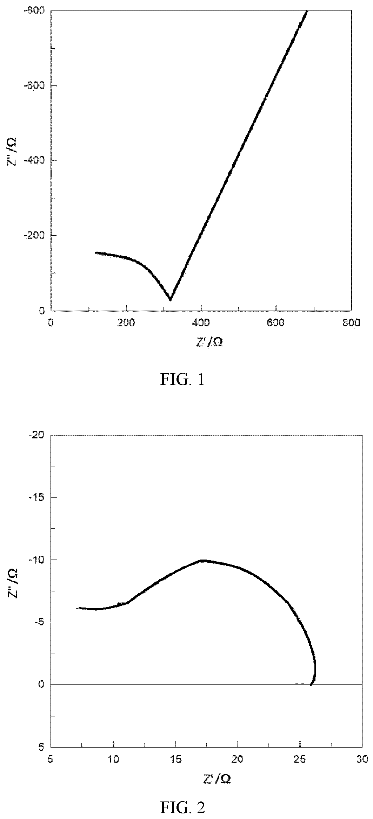

AC impedance of polymer electrolyte particles subjected to pressed forming was measured using an electrochemical workstation. The AC impedance is shown in FIG. 1. Ionic impedance of the polymer electrolyte sheet with a thickness of 900 mm was measured as 310 ohms, and an ionic conductivity was calculated as 2.9 × 10⁻⁴ S/cm.

### Comparative Example 1-1 Completely Conjugated Unit

6.7 g of pyrrole was added to 500 mL of a deionized water solvent, and the solution was stirred in a closed environment at a room temperature for 1 h to obtain a uniform colorless solution.

Subsequently, 500 g of an aqueous solution containing ammonium persulfate with a weight ratio of 40% as an oxidant was added to the solution by 5 equal parts every 10 mins; and then, the solution was stirred at the room temperature for 50 h to perform chemical oxidative polymerization for synthesis. At this time, the solution became turbid with the occurrence of an insoluble product.

Subsequently, a reaction liquid was filtered using a filter paper with a retention diameter of 3 µm, through which a polymer could not pass through, and polypyrrole as a polymer product could be obtained. The polymer was washed repeatedly with a solvent to remove excess oxidant and unreacted monomers until a pH value of a washing solution reached 6-7. The obtained polymer was then baked at 120°C in the air for 3 h to remove the solvent, so as to obtain the polymer which was black.

14 g of an electrolyte salt LiTFSI was dissolved into 50 g of water. 8 g of the obtained polypyrrole was put into the LiTFSI solution for stirring; then a mixture was vacuum baked at 120°C for 12 h to remove water; and an electrolyte mixed polymer material was obtained.

AC impedance of material particles subjected to pressed forming was measured using an electrochemical workstation. The AC impedance is shown in FIG. 2. The material is electronically conductive.

### Comparative Example 1-2 A Large Number of Non-Conjugated Units

The used polymer was polyethylene oxide (PEO) with a molecular weight of 1 million; 8 g of the polymer PEO and 14 g of an electrolyte salt LiTFSI were added to 200 mL of acetonitrile; and uniform mixing and stirring were performed until a mixture was transparent. Mixed slurry was vacuum baked at 120°C for 12 h to remove water; and finally, a polymer electrolyte was obtained.

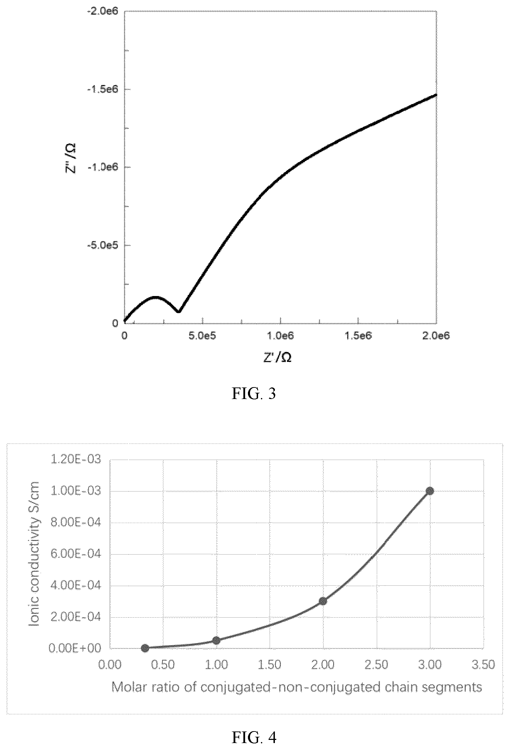

The material was pressed into a sheet with a diameter of 200 µm by two stainless steel gaskets, and its AC impedance was measured by an electrochemical workstation. As shown in FIG. 3, ionic impedance of the material was 3.3 × 10⁵ ohms, and an ionic conductivity was calculated as 1.7 × 10⁻⁷ S/cm.

### Example 1-2

6.7 g of pyrrole and 5.9 g of allyl benzene were put into 500 mL of an acetonitrile solvent, and the solution was stirred in a closed environment at a room temperature for 1 h to obtain a uniform colorless solution.

Subsequently, 600 g of an ethanol solution containing ferric chloride with a weight ratio of 40% as an oxidant was added to the solution by 5 equal parts every 10 mins; and then, the solution was stirred at the room temperature for 50 h to perform chemical oxidative polymerization for synthesis. At this time, the solution became turbid with the occurrence of an insoluble product.

Subsequently, a reaction liquid was filtered using a filter paper with a retention diameter of 3 µm, through which a polymer could not pass through, and a polymer product could be obtained. The polymer was washed repeatedly with a solvent to remove excess oxidant and unreacted monomers until a pH value of a washing solution reached 6-7. The obtained polymer was then baked at 80°C in the air for 3 h to remove the solvent, so as to obtain the polymer which was black brown.

17g of an electrolyte salt LiTFSI was dissolved into 50 g of water. 10g of the obtained conjugated polymer was put into the LiTFSI solution for stirring; then a mixture was vacuum baked at 120°C for 12 h to remove water; and finally, a finished polymer electrolyte product was obtained.

AC impedance of polymer electrolyte particles subjected to pressed forming was measured using an electrochemical workstation. Ionic impedance of the polymer electrolyte sheet with a thickness of 860 mm was measured as 78 ohms, and an ionic conductivity was calculated as 1.1 × 10⁻³ S/cm.

### Example 1-3

9.3 g of aniline and 3.8 g of propylene chloride were introduced into 500 mL of an acetonitrile solvent, and the solution was stirred in a closed environment at a room temperature for 1 h to obtain a uniform colorless solution.

Subsequently, 600 g of an acetonitrile solution containing ferric chloride with a weight ratio of 40% as an oxidant was added to the solution by 5 equal parts every 10 mins; and then, the solution was stirred at the room temperature for 40 h to perform chemical oxidative polymerization for synthesis.

Subsequently, a reaction liquid was filtered using a filter paper with a retention diameter of 3 µm, through which a polymer could not pass through, and a polymer product could be obtained. The polymer was washed repeatedly with a solvent to remove excess oxidant and unreacted monomers until a pH value of a washing solution reached 6-7. The obtained polymer was then baked at 100°C in the air for 3 h to remove the solvent, so as to obtain the polymer which was black.

17g of an electrolyte salt LiTFSI was dissolved into 50 g of water. 10g of the obtained conjugated polymer was put into the LiTFSI solution for stirring; then a mixture was vacuum baked at 120°C for 12 h to remove water; and finally, a finished polymer electrolyte product was obtained.

AC impedance of polymer electrolyte particles subjected to pressed forming was measured using an electrochemical workstation. Ionic impedance of the polymer electrolyte sheet with a thickness of 570mm was measured as 93 ohms, and an ionic conductivity was calculated as 6.1 × 10⁻⁴ S/cm.

### Example 1-4

A total amount of pyrrole and styrene was maintained at 9.6 g according to a molar ratio of 1: 3, 1: 1, 2: 1 or 3: 1. The pyrrole and the styrene were introduced into 500 mL of a deionized water solvent, and the obtained solution was stirred in a closed environment at a room temperature for 1 h.

Subsequently, 500 g of an aqueous solution containing ammonium persulfate with a weight ratio of 40% as an oxidant was added to the solution by 5 equal parts every 10 mins; and then, the solution was stirred at the room temperature for 50 h to perform chemical oxidative polymerization for synthesis of a target polymer.

Subsequently, a reaction liquid was filtered using a filter paper with a retention diameter of 3 µm, through which a polymer could not pass through, and a polymer product could be obtained. The polymer was washed repeatedly with a solvent to remove excess oxidant and unreacted monomers until a pH value of a washing solution reached 6-7. The obtained polymer was then baked at 120°C in the air for 3 h to remove the solvent, so as to obtain the polymer which was black brown.

14 g of an electrolyte salt LiTFSI was dissolved into 50 g of water. 8 g of the obtained several conjugated polymers was put into the LiTFSI solution for stirring; then a mixture was vacuum baked at 120°C for 12 h to remove water; and finally, four finished polymer electrolyte products were obtained.

AC impedance of polymer electrolyte particles subjected to pressed forming was measured using an electrochemical workstation; and an ionic conductivity was calculated for comparison. Results are shown in FIG. 4.

By comparing example 1-1 with comparative example 1-1, it is found that a fully conjugated structure polymer without a non-conjugated unit/chain segment has an extremely high electronic conductivity, which violates the requirements of the solid electrolyte itself for a high ionic conductivity and a low electronic conductivity. The non-conjugated unit/chain segment may also be called a spacer unit/chain segment which may effectively and greatly reduce the electronic conductivity of the material itself, highlighting an ability of the solid electrolyte to conduct ions.

By comparing example 1-1 with comparative example 1-2, it is found that too many non-conjugated units/chain segments also affect the ionic conductivity of the polymer electrolyte material. For example, a conjugated benzene ring in polyethylene oxide (PEO) binds to a non-conjugated ether group, and its ionic conductivity is only 2.0×10⁻⁶ S/cm.

In examples 1-2 and 1-3, a variety of conjugated and non-conjugated monomers are used for polymerization to obtain the ionic conductivities all larger than 1.0 × 10⁻⁴ S/cm.

**Table 1: Parameters of Polymer Solid Electrolyte in Various Examples**

| Serial number | Sample thickness (µm) | Ionic impedance (Ω) | Ionic conductivity (S/cm) |
|---|---|---|---|
| Example 1-1 | 900 | 310 | 2.9 × 10⁻⁴ |
| Example 1-2 | 860 | 78 | 1.1 × 10⁻³ |
| Example 1-3 | 570 | 93 | 6.1 × 10⁻⁴ |

Example 1-4 shows that the ionic conductivity of such solid electrolyte material is mainly affected by the ratio of the conjugated units/chain segments and the non-conjugated units/chain segments. The polymer with more conjugated chain segments has higher ionic conductivities, while the polymer with more non-conjugated chain segments has lower ionic conductivities.

### Example 2-1

The solid electrolyte obtained in example 1-1 was uniformly mixed with a lithium nickel cobalt manganese oxide positive electrode material, conductive carbon black, polyvinylidene fluoride as a binder and N-methyl pyrrolidone as a solvent according to a mass ratio of 10%: 80%: 5%: 5%: 100%, and a mixture was stirred at a high speed for 6 h to obtain a uniform slurry. An aluminum foil material was coated with the slurry, baked in a vacuum environment at 120°C for 3h, and then rolled to obtain an electrolyte composite positive electrode.

The solid electrolyte obtained in example 1-1 was uniformly mixed with a graphite negative electrode material, the conductive carbon black, a binder and deionized water as a solvent according to a mass ratio of 10%: 85%: 1%: 4%: 130%, and a mixture was stirred at a high speed for 6 h to obtain a uniform slurry. A copper foil material was coated with the slurry, baked in a vacuum environment at 120°C for 3 h, and then rolled to obtain an electrolyte composite negative electrode.

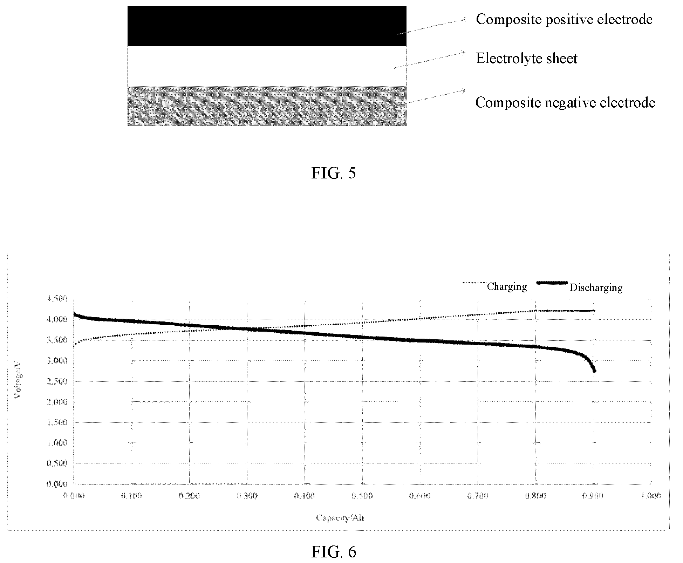

The electrolyte composite positive electrode, an electrolyte sheet and the electrolyte composite negative electrode were stacked, welded and then packaged to obtain a polymer lithium battery. Results are shown in FIG. 5. Results of a charge-discharge performance test are shown in FIG. 6.

## Claims

1. A block polymer solid electrolyte, comprising a polymer and at least one electrolyte salt, wherein the polymer is composed of a plurality of conjugated units/chain segments and non-conjugated units/chain segments, and a general formula of the polymer is R-(Aₙ-Bₘ)ₖ-R; and in the general formula, Aₙ is the conjugated unit/chain segment, having completely delocalized electrons, Bₘ is the non-conjugated unit/chain segment without completely delocalized electrons in a main chain range, **characterized in that** n is an integer larger than or equal to 1 and smaller than or equal to 6, m is an integer larger than 0 and smaller than or equal to 10, and k is an integer larger than or equal to 1 and smaller than or equal to 1000.

2. The block polymer solid electrolyte according to claim 1, **characterized in that** a conjugated structure in Aₙ may be a chain structure or contain a ring structure; further, the ring structure may be an aromatic ring or a heteroatom ring; more further, heteroatoms in the heteroatom ring may be sulfur atoms, nitrogen atoms, oxygen atoms and boron atoms.

3. The block polymer solid electrolyte according to claim 1, **characterized in that** the conjugated unit A may be one of the following structures:
(1) A contains a single ring, such as a phenyl group, a thienyl group, a pyrrolyl group, a furan group, a thiazolyl group or a pyridyl group, and optionally, may contain heteroatoms or branched chains, such as 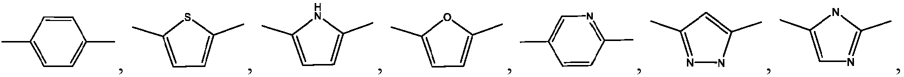 here n = 1-6;
(2) A may contain double rings, such as a quinolyl group, a naphthyl group, and an azulenyl group, and optionally, may contain heteroatoms or branched chains such as 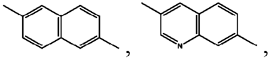 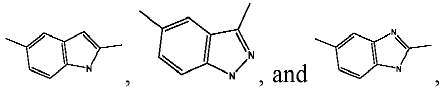 here n = 1-4;
(3) A may be of three rings, such as a fluorenyl group, a carbazolyl group, a phenanthryl group, and an anthryl group, and optionally, may also contain heteroatoms or branched chains such as 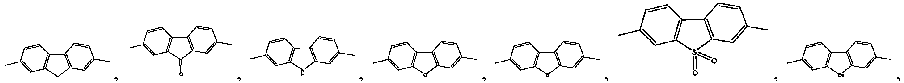 and 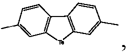 here n = 1-3;
(4) A may contain four rings, such as a benzoanthryl group and a benzophenanthryl group, and optionally, may contain heteroatoms or branched chains, here n = 1-2; and
(5) A may contain a combination of various ring structures in (1) - (4).

4. The block polymer solid electrolyte according to claim 1, **characterized in that** the conjugated unit/chain segment Aₙ further contains different side chains Rs.

5. The block polymer solid electrolyte according to claim 1, **characterized in that** a non-conjugated unit B may be an ether group, a thioether group, an ester group, a carbonate group, a phenyl ether group, a phenyl sulfide group, and a propenyl group, such as

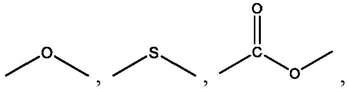

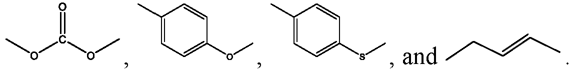

6. The block polymer solid electrolyte according to claim 1, **characterized in that** in the general formula of the polymer, R may be a common end-capping group such as an alkanyl group, the ether group, the ester group or hydrogen.

7. The block polymer solid electrolyte according to claim 1, **characterized in that** the cations in the electrolyte salt contain monovalent cations or divalent metal cations; and further, the cations may be lithium ions.

8. The block polymer solid electrolyte according to claim 1, **characterized in that** in the electrolyte salt, the anions are one or more of hexafluorophosphate ions PF₆⁻, bis(trifluoromethylsulfonyl)imide anions TFSI⁻, bis(oxalate)borate anions BOB⁻, tetrafluoroborate ions BF₄⁻, difluoro(oxalato)borate anions ODFB⁻, and bis(fluorosulfonyl)imide anion FSI⁻.

9. The block polymer solid electrolyte according to claim 1, **characterized in that** in the polymer, each conjugated unit/chain segment contains at least one cation and at least one anion.

10. The block polymer solid electrolyte according to claim 1, **characterized in that** an ionic conductivity of the solid electrolyte at a room temperature is larger than or equal to 1 × 10⁻⁴ S/cm, preferably (1 × 10⁻⁴ - 1 × 10⁻²) S/cm.

11. Application of the block polymer solid electrolyte according to any one of claims 1-10 in the preparation of an electrochemical device.

## Patentansprüche

1. Ein Blockpolymer-Festkörperelektrolyt, umfassend ein Polymer und mindestens ein Elektrolytsalz, wobei das Polymer aus mehreren konjugierten Einheiten/Kettensegmenten und nichtkonjugierten Einheiten/Kettensegmenten besteht, und eine allgemeine Formel des Polymers R-(Aₙ-Bₘ)ₖ-R lautet, und in der allgemeinen Formel Aₙ die konjugierte Einheit/das konjugierte Kettensegment mit vollständig delokalisierten Elektronen ist, Bₘ die nichtkonjugierte Einheit/das nichtkonjugierte Kettensegment ohne vollständig delokalisierte Elektronen im Bereich der Hauptkette ist, **dadurch gekennzeichnet, dass** n eine ganze Zahl ist, die größer oder gleich 1 und kleiner oder gleich 6 ist, m eine ganze Zahl ist, die größer als 0 und kleiner oder gleich 10 ist, und k eine ganze Zahl ist, die größer oder gleich 1 und kleiner oder gleich 1000 ist.

2. Blockpolymer-Festkörperelektrolyt nach Anspruch 1, **dadurch gekennzeichnet, dass** eine konjugierte Struktur in Aₙ eine Kettenstruktur sein oder eine Ringstruktur enthalten kann; ferner kann die Ringstruktur ein aromatischer Ring oder ein Heteroatomring sein; weiterhin können die Heteroatome im Heteroatomring Schwefelatome, Stickstoffatome, Sauerstoffatome und Boratome sein.

3. Blockpolymer-Festkörperelektrolyt nach Anspruch 1, **dadurch gekennzeichnet, dass** die konjugierte Einheit A eine der folgenden Strukturen sein kann:
(1) A enthält einen einzelnen Ring, wie beispielsweise eine Phenylgruppe, Thienylgruppe, Pyrrolylgruppe, Furangruppe, Thiazolylgruppe oder Pyridylgruppe, und kann optional Heteroatome oder verzweigte Ketten enthalten, wie beispielsweise 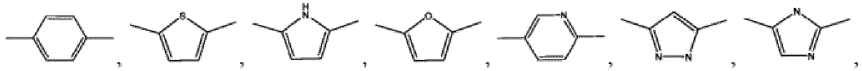 wobei n hier 1 bis 6 ist;
(2) A kann Doppelringe enthalten, wie beispielsweise eine Chinolylgruppe, Naphthylgruppe oder Azulenylgruppe, und kann optional Heteroatome oder verzweigte Ketten enthalten, wie beispielsweise 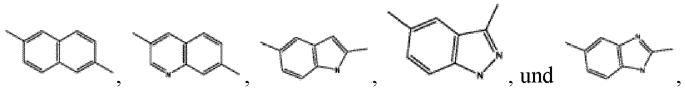 wobei n hier 1 bis 4 ist;
(3) A kann aus drei Ringen bestehen, wie beispielsweise einer Fluorenylgruppe, Carbazolylgruppe, Phenanthrylgruppe oder Anthrylgruppe, und kann optional auch Heteroatome oder verzweigte Ketten enthalten, wie beispielsweise 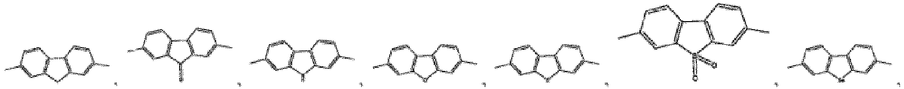 und 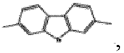 wobei n hier 1 bis 3 ist;
(4) A kann vier Ringe enthalten, wie beispielsweise eine Benzoanthrylgruppe und eine Benzophenanthrylgruppe, und kann optional Heteroatome oder verzweigte Ketten enthalten, wobei n hier 1 bis 2 ist; und
(5) A kann eine Kombination verschiedener Ringstrukturen gemäß den Punkten (1) bis (4) enthalten.

4. Blockpolymer-Festkörperelektrolyt nach Anspruch 1, **dadurch gekennzeichnet, dass** das konjugierte Einheit/Kettensegment Aₙ ferner unterschiedliche Seitenketten Rs enthält.

5. Blockpolymer-Festkörperelektrolyt nach Anspruch 1, **dadurch gekennzeichnet, dass** eine nicht-konjugierte Einheit B eine Ethergruppe, Thioethergruppe, Estergruppe, Carbonatgruppe, Phenylethergruppe, Phenylsulfidgruppe oder Propenylgruppe sein kann, wie beispielsweise

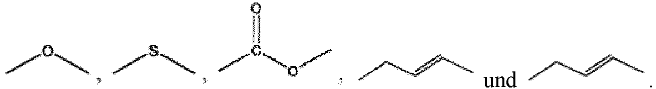

6. Blockpolymer-Festkörperelektrolyt nach Anspruch 1, **dadurch gekennzeichnet, dass** R in der allgemeinen Formel des Polymers eine übliche Endgruppe sein kann, wie beispielsweise eine Alkanylgruppe, eine Ethergruppe, eine Estergruppe oder Wasserstoff.

7. Blockpolymer-Festkörperelektrolyt nach Anspruch 1, **dadurch gekennzeichnet, dass** die Kationen im Elektrolytsalz einwertige Kationen oder zweiwertige Metallkationen enthalten können; und ferner, dass die Kationen Lithiumionen sein können.

8. Blockpolymer-Festkörperelektrolyt nach Anspruch 1, **dadurch gekennzeichnet, dass** in dem Elektrolytsalz die Anionen eines oder mehrere der Hexafluorophosphat-Ionen PF⁻₆, Bis(trifluormethylsulfonyl)imid-Anionen TFSI⁻, Bis(oxalat)borat-Anionen BOB⁻, Tetrafluorborat-Ionen BF⁻₄, Difluor(oxalato)borat-Anionen ODFB⁻ und Bis(fluorsulfonyl)imid-Anionen FSI⁻ sind.

9. Blockpolymer-Festkörperelektrolyt nach Anspruch 1, **dadurch gekennzeichnet, dass** im Polymer jede konjugierte Einheit/jedes konjugierte Kettensegment mindestens ein Kation und mindestens ein Anion enthält.

10. Blockpolymer-Festkörperelektrolyt nach Anspruch 1, **dadurch gekennzeichnet, dass** die Ionenleitfähigkeit des Festkörperelektrolyten bei Raumtemperatur größer oder gleich 1 x 10⁻⁴ S/cm ist, vorzugsweise im Bereich von (1 x 10⁻⁴ -1x 10⁻²) S/cm.

11. Verwendung des Blockpolymer-Festkörperelektrolyten nach einem der Ansprüche 1 bis 10 zur Herstellung einer elektrochemischen Vorrichtung.

## Revendications

1. Électrolyte solide polymère séquencé, comprenant un polymère et au moins un sel électrolytique, dans lequel le polymère est composé d'une pluralité d'unités/segments de chaîne conjugués et d'unités/segments de chaîne non conjugués, et une formule générale du polymère est R-(Aₙ-Bₘ)ₖ-R; et dans la formule générale, Aₙ est l'unité/ segment de chaîne conjugué, présentant des électrons complètement délocalisés, Bₘ est l'unité/segment de chaîne non conjugué sans électrons complètement délocalisés dans une plage de chaîne principale, **caractérisé en ce que** n est un nombre entier supérieur ou égal à 1 et inférieur ou égal à 6, m est un nombre entier supérieur à 0 et inférieur ou égal à 10, et k est un nombre entier supérieur ou égal à 1 et inférieur ou égal à 1000.

2. Électrolyte solide polymère séquencé selon la revendication 1, **caractérisé en ce qu'**une structure conjuguée en Aₙ peut être une structure en chaîne ou contenir une structure cyclique ; en outre, la structure cyclique peut être un cycle aromatique ou un cycle hétéroatome ; plus encore, des hétéroatomes dans le cycle hétéroatome peuvent être des atomes de soufre, des atomes d'azote, des atomes d'oxygène et des atomes de bore.

3. Électrolyte solide polymère séquencé selon la revendication 1, **caractérisé en ce que** l'unité conjuguée A peut être l'une des structures suivantes :
(1) A contient un seul cycle, tel qu'un groupe phényle, un groupe thiényle, un groupe pyrrolyle, un groupe furane, un groupe thiazolyle ou un groupe pyridyle, et optionnellement, peut contenir des hétéroatomes ou des chaînes ramifiées, tels que 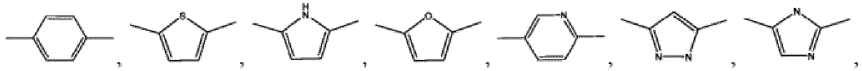 ici n = 1-6;
(2) A peut contenir des cycles doubles, tels qu'un groupe quinolyle, un groupe naphtyle, et un groupe azulényle, et optionnellement, peut contenir des hétéroatomes ou des chaînes ramifiées tels que 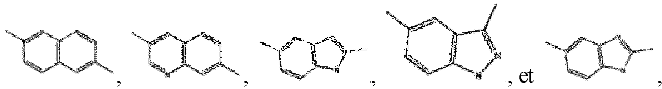 ici n=1-4;
(3) A peut contenir trois cycles, tels qu'un groupe fluorényle, un groupe carbazolyle, un groupe phénanthryle, et un groupe anthryle, et optionnellement, peut également contenir des hétéroatomes ou des chaînes ramifiées tels que 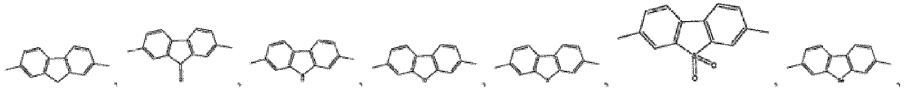 et 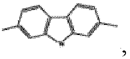 ici n=1-3 ;
(4) A peut contenir quatre cycles, tels qu'un groupe benzoanthryle et un groupe benzophénanthryle, et optionnellement, peut contenir des hétéroatomes ou des chaînes ramifiées, ici n = 1-2 ; et
(5) A peut contenir une combinaison de diverses structures cycliques en (1) - (4).

4. Électrolyte solide polymère séquencé selon la revendication 1, **caractérisé en ce que** l'unité/segment de chaîne conjugué Aₙ contient en outre différentes chaînes latérales Rs.

5. Électrolyte solide polymère séquencé selon la revendication 1, **caractérisé en ce qu'**une unité non conjuguée B peut être un groupe éther, un groupe thioéther, un groupe ester, un groupe carbonate, un groupe phényl éther, un groupe sulfure de phényle, et un groupe propényle, tel que

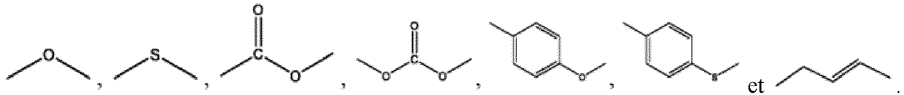

6. Électrolyte solide polymère séquencé selon la revendication 1, **caractérisé en ce que** dans la formule générale du polymère, R peut être un groupe de coiffage terminal commun tel qu'un groupe alcanyle, le groupe éther, le groupe ester ou l'hydrogène.

7. Électrolyte solide polymère séquencé selon la revendication 1, **caractérisé en ce que** les cations dans le sel électrolytique contiennent des cations monovalents ou des cations métalliques divalents ; et en outre, les cations peuvent être des ions lithium.

8. Électrolyte solide polymère séquencé selon la revendication 1, **caractérisé en ce que** dans le sel électrolytique, les anions sont un ou plusieurs parmi les ions hexafluorophosphate PF⁻₆, les anions bis(trifluorométhylsulfonyl)imide TFSI⁻, les anions bis(oxalate)borate BOB⁻, les ions tétrafluoroborate BF⁻₄, les anions difluoro(oxalato)borate ODFB⁻ et l'anion bis(fluorosulfonyl)imide FSI⁻.

9. Électrolyte solide polymère séquencé selon la revendication 1, **caractérisé en ce que** dans le polymère, chaque unité/segment de chaîne conjugué contient au moins un cation et au moins un anion.

10. Électrolyte solide polymère séquencé selon la revendication 1, **caractérisé en ce qu'**une conductivité ionique de l'électrolyte solide à température ambiante est supérieure ou égale à 1 x 10⁻⁴ S/cm, de préférence (1 x 10⁻⁴ - 1 x 10⁻²) S/cm.

11. Application de l'électrolyte solide polymère séquencé selon l'une quelconque des revendications 1-10 dans la préparation d'un dispositif électrochimique.
